Europäisches Patentamt

European Patent Office

Office européen des brevets

(11) Publication number: **0 065 820**
**B1**

(12) EUROPEAN PATENT SPECIFICATION

(45) Date of publication of patent specification: **25.11.87**

(21) Application number: **82302072.2**

(22) Date of filing: **22.04.82**

(51) Int. Cl.⁴: **G 01 G 19/32,** G 01 G 13/00, G 01 G 13/285

(54) Combinatorial weighing apparatus.

(43) Date of publication of application:
**01.12.82 Bulletin 82/48**

(45) Publication of the grant of the patent:
**25.11.87 Bulletin 87/48**

(84) Designated Contracting States:
**DE FR GB IT**

(56) References cited:
**EP-A-0 063 042**
**FR-A-2 399 012**
**US-A-3 939 928**
**US-A-3 974 888**
**US-A-4 141 442**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Mikami, Yoshiharu**
**126-12, Shimogamo**
**Miyazaki-cho Sakyo-ku Kyoto (JP)**

(74) Representative: **Fane, Christopher Robin King et al**
**HASELTINE LAKE & CO. Hazlitt House 28 Southampton Buildings Chancery Lane London, WC2A 1AT (GB)**

Courier Press, Leamington Spa, England.

## Description

This invention relates to a combinatorial weighing apparatus.

An automatic weighing apparatus based on a combination computing system (referred to as a "combinatorial weighing apparatus") includes a plurality of weighing machines. It operates by measuring the weights of articles automatically fed to the respective weighing machines, adding the actually measured weight values in each of an arbitrary or predetermined number of different combinations, comparing each resulting sum with a predetermined target weight, and selecting the combination whose weight sum is equal or closest to the target weight. In such combinatorial weighing apparatus, the distributive supply of the articles to the respective weighing machines, the computation for obtaining the best combination, the delivery of the articles belonging to the best combination, etc. are fully automatic. The apparatus can weigh the articles with great accuracy in a short period of time, and is especially suited to the combinatorial weighing of bulky articles such as vegetables, fruits and confectioneries.

US—A—3,939,928 describes one such form of combinatorial weighing apparatus.

Another form of weighing apparatus is described in US—A—3,974,888 in which articles varying in unit weight are continuously weighed to classify them according to whether their weights lie outside a predetermined tolerance range, are within and towards one limit of the range or are within and towards the other limit of the range. In this apparatus, a conveyor carries weighed articles from a scale pan. At right angles to the direction of travel of this conveyor are arranged three further conveyors, one for discharging articles outside the range, one for "plus-oriented" articles and one for "minus-oriented" articles. Pushing members are provided for pushing articles from the first conveyor to an appropriate one of the further conveyors, and for pushing articles from the plus- and minus- oriented conveyors to a collection hopper.

Some kinds of articles, however, are not suitable for distributive supply. They are, for example, articles which have large volumes, articles which are likely to be damaged when supplied automatically and distributively, and articles which are viscous and poorly distributed. It has therefore been impossible to apply the known fully automatic combinatorial weighing apparatus to the combinatorial weighing of such articles. In such cases, the articles are delivered manually to the weighing machines. US—A—3,974,888 gives no details as to how the weighing itself is accomplished.

According to the present invention there is provided combinatorial weighing apparatus comprising an array of weighing machines for providing respective measures of the weight of articles placed on respective scales of the machines and selection means connected to employ the said measures to select a best combination of machines carrying articles having a total weight equal or closest to a predetermined weight, characterised by a plurality of pushing members mounted for movement respectively over the said scales and operable to discharge the articles from scales of the selected combination onto a conveyor of the apparatus.

An embodiment of the invention can provide a combinatorial weighing apparatus which is capable of the combinatorial weighing of articles unsuited for distributive supply.

Another embodiment of the invention can provide a semiautomatic combinatorial weighing apparatus which, merely by putting articles on weighing machines, can perform combinatorial weighing automatically, deliver the articles belonging to the best combination and carry the delivered articles to a predetermined location via a conveyor.

For a better understanding of the present invention, and to show how the same may be carried into effect, reference will now be made, by way of example, to the accompanying drawings, in which:—

Figure 1 is a perspective view of a combinatorial weighing apparatus according to one embodiment of this invention;

Figure 2 is a schematic view of a mechanism for driving pushing members for use in the combinatorial weighing apparatus of Figure 1.

Figure 3 is a sectional view of a weighing machine for use in the combinatorial weighing apparatus of Figure 1; and

Figure 4 is a sectional view of a set of weighing machines.

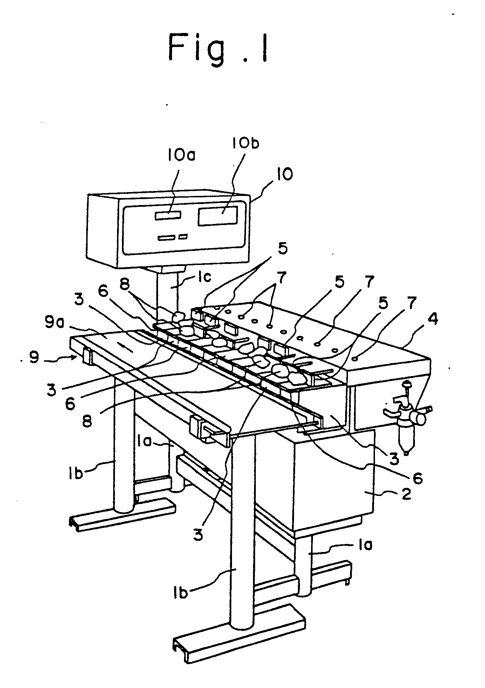

Referring to Figure 1, a bed 2 is supported by legs 1a. On the bed 2, a plurality of weighing machines 3 are arrayed in juxtaposition one with the next, and a housing 4 is mounted. Pushing members 5, 5 are disposed in correspondence with the respective weighing machines 3, 3 ... in a manner retractably to advance from a side surface of the housing 4. The pushing members 5, 5 ... can move frontward and backward on scales, hereinafter referred to as bowls 6, 6 ... of the corresponding weighing machines 3, 3 .... As will be described later a driving mechanism for selectively advancing and retracting the pushing members 5, 5 ... is disposed in the housing 4. On the top of the housing 4, selection indicating lamps 7, 7 ... are mounted in correspondence with the respective weighing machines. The selection indicating lamps 7, 7 ... indicate the weighing machines 3, 3 ... on which articles 8, 8 ... belonging to the best combination are placed.

Mounted on legs 1b and 1b is a delivery conveyor holder 9, on which an endless conveyor 9a is disposed in a manner to be movable in the direction of the arrow. The plurality of weighing machines 3, 3 ... mentioned above are juxtaposed in the moving direction of the conveyor 9a. The level of the conveyor 9a is somewhat lower than that of the bowls 6, 6 ....

A control box 10 is rotatably supported on a leg 1c. The control box 10 includes a switch portion 10a for setting the data of a predetermined target weight value etc., a display portion 10b for indicating various data, and so forth.

In the weighing apparatus, when batches of the articles 8, 8 ... are placed on the bowls 6, 6 ... manually, the weighing machines 3, 3 ... measure the weights of the respective batches of the articles. A combination computing unit, not shown, selects the best combination, namely the combination nearest the target weight, based on the weight values of the respective batches. The pushing members 5, 5 ... corresponding to the weighing machines 3, 3 ... on which the articles 8, 8 ... belonging to the best combination are placed, are advanced. Owing to the advancing operation of the pushing members 5, 5 ..., the particular batches of the articles 8, 8 ... fall onto the conveyor 9a. They are conveyed in the direction of the arrow, and are gathered into a pool hopper or the like, not shown. The pushing members 5 are normally held retracted, and the selectively advanced ones are retracted after a predetermined time.

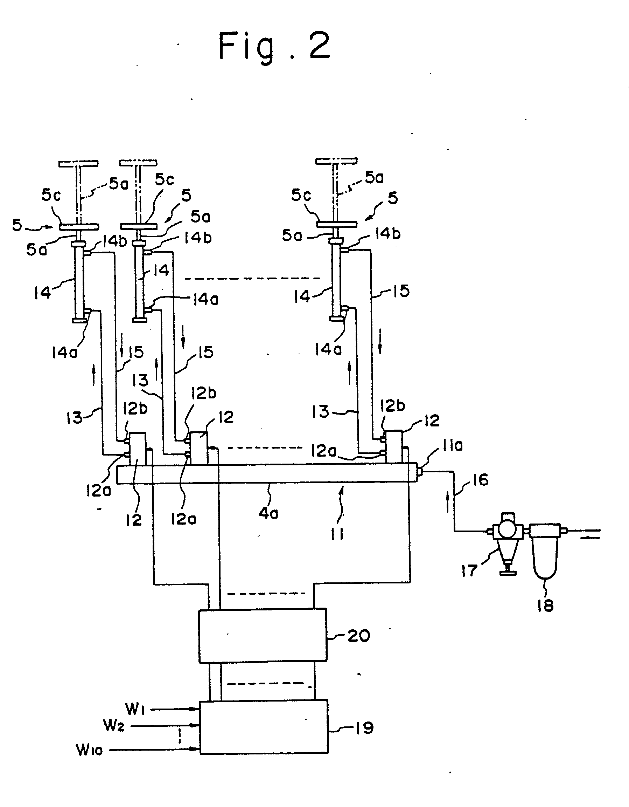

Fig. 2 is a view for explaining a mechanism for driving the pushing members. Electromagnetic valves 12, 12 ... of a number equal to the number of the juxtaposed weighing machines 3, 3 ... are fixed at equal intervals longitudinally of an air circulating tube 11. Each electromagnetic valve 12 has ports 12a and 12b. The respective ports 12a are connected through pipes 13, 13 ... to ports 14a, 14a ... of air cylinders 14, 14 ... which are disposed in correspondence with the weighing machines 3, 3 ..., while the respective ports 12b are connected through pipes 15, 15 ... to ports 14b, 14b ... of the air cylinders 14, 14 .... Although not shown in the figure, a piston is disposed in each cylinder 14. This piston has one end of a piston rod 5a of the pushing member 5 attached thereto, and a plate 5c is secured to the other end of the piston rod 5a. A regulator 17 and an air filter 18 are serially connected to a port 11a of the air circulating tube 11 by way of a pipe 16.

When a combination control unit 19 is supplied with the weight values $w_1$, $w_2$ ... and $w_{10}$ of the batches of the articles 8, 8 ... from the respective weighing machines 3, 3 ..., it performs a combination computation and provides signals indicative of the best combination. On the basis of the best combination signals, an electromagnetic valve driver circuit 20 energizes the electromagnetic valves 12, 12 ... corresponding to the weighing machines 3, 3 ... on which the selected batches of the articles are placed. Thus, air is fed into the air cylinders 14, 14 ... through their ports 14a, 14a ... via the ports 12a, 12a ... of the energized electromagnetic valves 12, 12 ..., to move the pistons upwardly as viewed in the figure and to advance the pushing members 5, 5 .... Owing to the advance of the pushing members 5, 5 ..., the articles 8, 8 ... placed on the bowls 6, 6 are delivered onto the conveyor 9a. After the electromagnetic valves 12, 12 ... have been energized for the predetermined time, they are deenergized.

Then, the air enters the air cylinders 14, 14 through the ports 12b, 12b ..., pipes 15, 15 ... and ports 14b, 14b ..., to move the pistons downwardly and to retract the pushing members 5, 5 ... to their initial positions.

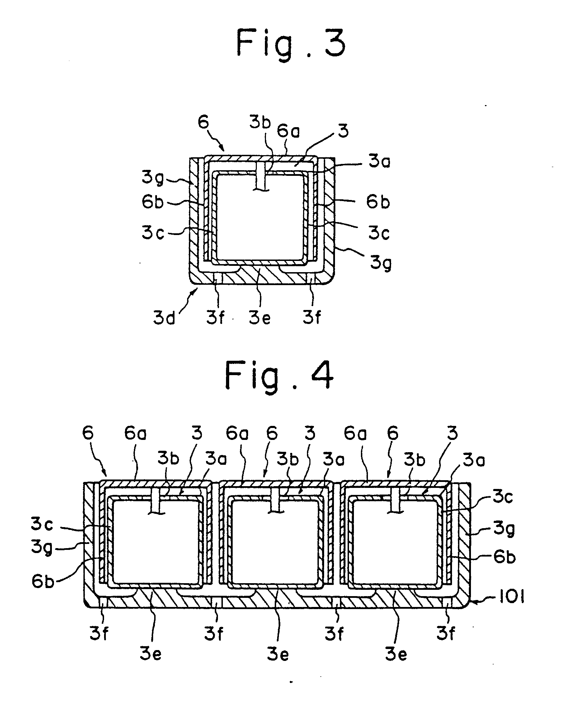

Figures 3 and 4 are sectional views of weighing machines.

Referring to Figure 3 each weighing machine 3 has a suitable detection mechanism such as a load cell in the form of a weight detecting device having a frame 3a with an opening 3b in a predetermined part of the top of the frame 3a. The weighing bowl 6 has a structure in which a shield portion 6b is provided depending peripherally from an upper portion 6a, the upper portion being for supporting articles being weighed. The bowl is thus pot-shaped and opens downwardly. The bowl 6 is so supported as to be fitted in a pot-shaped mounting or housing receptacle 3d, with the wall 3c of the frame 3a covered by the depending portion 6b of the bowl 6. The mounting receptacle 3d has a base and an upstanding peripheral wall 3g. There is a mounting element in the form of a protuberance 3e arranged centrally of its base and apertures serving as drip holes 3f are disposed around the protuberance 3e. The weighing machine 3 with the bowl 6 supported on the weight detecting device is fitted into the mounting receptacle 3d and is fixed to the protuberance 3e in such a manner that the depending portion 6b of the bowl 6 is surrounded by the peripheral wall 3g.

In the weighing machine of Figure 4, a mounting or housing receptacle 101 has a predetermined length and is formed with a plurality of protuberances 3e at equal intervals along its base. A plurality of weighing machines 3 are mounted and fixed onto the respective protuberances 3e in side by side relationship. An upstanding peripheral wall 3g formed at the periphery of the mounting receptacle 101 surrounds the outer surfaces of the depending portions 6b of the respective bowls 6. In Figure 4, the same parts as in Figure 3 are assigned the same reference numerals.

With the weighing machines shown in Figures 3 and 4, even in such a case where the bowls 6 are washed with water, the invasion of the water into the weighing machine bodies can be reliably prevented. Moreover, any weighing error ascribable to the contact of anything other than the article to be weighed with the bowl 6 can be prevented.

There will next be described a weighing operation with a weighing apparatus according the above described embodiment.

First, a power switch, not shown, is closed, and various data such as the number of selection and the target weight of the articles 8 are preset by means of the control box 10. An operator places the articles 8 on the respective bowls 6 manually and closes a start switch disposed on the control box 10. Then, the weight values $w_1$, $w_2$ ... and $w_{10}$ of the respective batches of the articles 8 placed on the bowls 6 are applied to the control unit 19 (refer to Figure 2). Here, combinations are formed, the weights of each combination added, and the combination which exhibits the target weight value or an approximate value thereof and which contains the preset number of batches is selected. The indicating lamps 7, 7 ... corresponding to the selected batches are turned on, while at the same time the electromagnetic valves 12, 12 ... corresponding to the weighing machines 3, 3 ... on which the selected batches are placed are energized by the electromagnetic valve driver circuit 20. Upon the energization of the electromagnetic valves, the corresponding air cylinders 14, 14 ... are actuated to advance the pushing members 5, 5 ..., so that the batches of articles 8 on the bowls 6 are pushed out onto the conveyor 9a. The articles 8 pushed out are transferred to the next station by the delivery conveyor 9a, whereas the batches of articles 8 on the unselected bowls 6 are held intact on these bowls 6. When the advanced pushing members 5, 5 ... have been moved back to their original positions after the predetermined period of time, the articles 8 are again placed on the empty bowls 6 manually. When the start switch is subsequently closed, the weight values of the respective batches of the articles 8 are combined and added again by the combination control unit. The selected batches of the articles 8 are pushed out onto the delivery conveyor 9a as in the foregoing step. Thenceforth, the articles are weighed according to the same procedure.

An embodiment of the invention can be semiautomatic, as described above, and can be suited to weighing a commodity of large volume, a commodity susceptible to damage, etc. into a target weight. Moreover, since the apparatus is designed to be compact, it can be fabricated by an already-installed job line. Further, since the apparatus adopts the system of combining and selecting measured weight values, the variation in the weights of the individual articles need not affect the precision of weighing.

## Claims

1. Combinatorial weighing apparatus comprising an array of weighing machines (3) for providing respective measures of the weights of articles placed on respective scales (6) of the machines and selection means (10) connected to employ the said measures to select a best combination of machines, carrying articles (8) having a total weight equal or closest to a predetermined weight, characterised by a plurality of pushing members (5) mounted for movement respectively over the said scales and operable to discharge the articles from scales of the selected combination onto a conveyor of the apparatus.

2. Combinatorial weighing apparatus according to claim 1, further comprising a control means (10a) operable to set the predetermined weight.

3. Combinatorial weighing apparatus as claimed in claim 1 or 2, in which the pushing members (5) are associated respectively with piston and cylinder arrangements (5a, 14) of the apparatus, relative movement between the piston and cylinder of each arrangement causing movement of its associated pushing member (5) over its associated scale (6), the apparatus further comprising a plurality of electromagnetic valves for respective weighing machines, and circuitry for actuating the electromagnetic valves (12) corresponding to the weighing machines of the selected combination so as to operate piston and cylinder arrangements associated with the weighing machine of the selected combination, thereby to operate the said pushing members to discharge said articles.

4. Combinatorial weighing apparatus according to claim 3, in which said piston and cylinder arrangements are air actuated.

5. Combinatorial weighing apparatus according to any preceding claim, wherein the scale (6) of each weighing machine, supported on a weight sensing device (3a) of the machine, has an upper portion (6a), for supporting articles being weighed, and a shield portion (6b) which depends from a peripheral region of the said upper portion so as to surround laterally the said weight sensing device which device is mounted within an upwardly open mounting receptacle (3d) of the apparatus on a base portion of that receptacle.

6. Combinatorial weighing apparatus according to claim 5, wherein the said mounting receptacle has a plurality of such weight-sensing devices mounted therein, on its said base portion.

7. Combinatorial weighing apparatus as claimed in claim 5 or 6, in which the mounting receptacle is provided with one or more protrusions (3e) extending upwardly from its base portion, thereby to mount such weight sensing device(s) thereon.

## Patentansprüche

1. Kombinatorische Wägvorrichtung mit einer Reihe von Wägmaschinen (3), die jeweilige Meßwerte von Gewichten von auf jeweiligen Wagschalen (6) der Maschinen plazierten Gegenständen liefern, und Selektiereinrichtungen (10), die so geschaltet sind, daß sie die Meßwerte zum Wählen einer besten Kombination von Maschinen verwenden, welche Gegenstände (8) halten, deren Gesamtgewicht einem vorbestimmten Gewicht (8) gleicht oder am nächsten kommt, gekennzeichnet durch mehrere Schiebeteile (5), die jeweils zur Bewegung über die Wagschalen montiert sind und zum Ausgeben der Gegenstände von Wagschalen der ausgewählten Kombination auf einen Förderer der Vorrichtung betätigbar sind.

2. Kombinatorische Wägvorrichtung nach Anspruch 1, ferner mit einer Steuereinrichtung (10a), die zum Einstellen des vorbestimmten Gewichtes betätigbar ist.

3. Kombinatorische Wägvorrichtung nach Anspruch 1 oder 2, bei der den Schiebeteilen (5) jeweils Kolben- und Zylinderanordnungen (5a, 14) der Vorrichtung zugeordnet sind, wobei relative Bewegung zwischen dem Kolben und dem Zylinder jeder Anordnung eine Bewegung ihres zugeordneten Schiebeteils (5) über ihre zugeordnete Wagschale (6) bewirkt, wobei die Vorrichtung ferner mehrere elektromagnetische Ventile für jeweilige Wägmaschinen und eine Schaltung aufweist, die die den Wägmaschinen der gewählten Kombination entsprechenden elektromagnetischen Ventile (12) aktiviert, um die der Wägmaschine der gewählten Kombination zugeordneten Kolben- und Zylinderanordnungen zu betätigen und dadurch die Schiebeteile zum Ausgeben der Gegenstände zu betätigen.

4. Kombinatorische Wägvorrichtung nach Anspruch 3, bei der die Kolben- und Zylinderanordnungen luftbetätigt sind.

5. Kombinatorische Wägvorrichtung nach einem der vorhergehenden Ansprüche, bei der die Wagschale (6) jeder Wägmaschine, die auf einer Gewichtsermittlungseinrichung (3a) der Maschine steht, einen oberen Teil (6a) zum Stützen gewogener Gegenstände und einen Abschirmteil (6b) hat, der von einem Umfangsbereich des oberen Teils so herabhängt, daß er die Gewichtsermittlungseinrichtung seitlich umgibt, welche innerhalb eines nach oben hin offenen Montierbehälters (3d) der Vorrichtung auf einem Basisteil dieses Behälters montiert ist.

6. Kombinatorische Wägvorrichtung nach Anspruch 5, bei der in dem Montierbehälter auf dessen Basisteil mehrere derartige Gewichtsermittlungseinrichtungen montiert sind.

7. Kombinatorische Wägvorrichtung nach Anspruch 5 oder 6, bei der der Montierbehälter ein oder mehrere Vorsprünge (3e) aufweist, die sich von seinem Basisteil nach oben erstrecken, wodurch auf ihnen eine derartige Gewichtsermittlungsrichtung (derartige Gewichtsermittlungseinrichtungen) montierbar ist (sind).

## Revendications

1. Appareil combiné de pesage comprenant une ligne de machines peseuses (3) fournissant les mesures respectives des poids des articles placés sur les plateaux respectifs (6) des machines et une moyen de sélection (10) relié de façon à utiliser ces mesures pour sélectionner la combinaison la meilleure de machines supportant des articles (8) dont le poids total est égal à un poids prédéterminé ou le plus proche de ce dernier, caractérisé par une pluralité d'éléments pousseurs (5) montés pour se déplacer respectivement au-dessus de ces plateaux et manoeuvrables pour décharger sur un convoyeur de l'appareil les articles des plateaux de la combinaison sélectionnée.

2. Appareil combiné de pesage suivant la revendication 1, comprenant en outre un moyen (10a) de commande manoeuvrable pour régler un poids prédéterminé.

3. Appareil combiné de pesage suivant l'une des revendications 1 ou 2, dans lequel les éléments pousseurs (5) sont associés respectivement à des dispositifs (5a et 14) à piston et vérin de l'appareil, le déplacement relatif entre le piston et le vérin de chaque dispositif provoquant le déplacement de l'élément pousseur (5) qui lui est associé, au-dessus de sont plateau associé 6, l'appareil comprenant en outre une pluralité de soupapes électromagnétiques pour les machines peseuses respectives, et des circuits de commande des soupapes électromagnétiques (12) correspondant aux machines peseuses de la combinaison sélectionnée de façon à commander les dispositifs à piston et vérin associés à la machine peseuse de la combinaison sélectionnée, de sorte que la manoeuvre des éléments pousseurs permet de décharger les articles.

4. Appareil combiné de pesage suivant la revendication 3, dans lequel les dispositifs à piston et vérin sont à commande pneumatique.

5. Appareil combiné de pesage suivant l'une quelconque des revendications précédentes, dans lequel le plateau (6) de chaque machine peseuse, supporté par un dispositif (3a) de détection de poids faisant partie de la machine, comporte une partie supérieure (6a) destinée à supporter les articles à peser, et une partie (6b) formant écran, descendant d'une région périphérique de la partie supérieure de façon à entourer latéralement le dispositif de détection de poids, lequel dispositif est monté à l'intérieur d'un réceptacle (3d) de montage, ouvert vers le haut, de l'appareil sur un partie de base de ce réceptacle.

6. Appareil combiné de pesage suivant la revendication 5, dans lequel le réceptacle de montage comporte une pluralité de dispositifs de détection de poids de ce genre, montés à l'intérieur, sur sa partie de base.

7. Appareil combiné de pesage suivant l'une des revendications 5 ou 6, dans lequel le réceptacle de montage est doté d'une ou plusieurs protubérances (3a) se prolongeant vers le haut à partir de sa partie de base, permettant le montage du ou des dispositifs de détection de poids.

# Fig . I

# Fig.2

# Fig.3

# Fig.4